# EUROPÄISCHE PATENTSCHRIFT

(11) **EP 3 805 625 B1**
(45) Veröffentlichungstag und Bekanntmachung des Hinweises auf die Patenterteilung: **13.09.2023**
(21) Anmeldenummer: 19202012.1
(22) Anmeldetag: 08.10.2019
(51) Int. Cl.: F16L 37/23, F16L 55/00, G01K 11/12, G01K 13/02, G01K 1/14

(54) **KUPPLUNGSSYSTEM FÜR SCHLAUCH- UND/ODER ROHRLEITUNGEN UND VERFAHREN ZUR HANDHABUNG EINES KUPPLUNGSSYSTEMS FÜR SCHLAUCH- UND/ODER ROHRLEITUNGEN**
COUPLING SYSTEM FOR HOSE AND / OR PIPE LINES AND METHOD FOR HANDLING A COUPLING SYSTEM FOR HOSE AND / OR PIPE LINES
SYSTÈME D'ACCOUPLEMENT POUR CONDUITES RIGIDES ET / OU FLEXIBLES ET PROCÉDÉ DE MANIPULATION D'UN SYSTÈME D'ACCOUPLEMENT POUR CONDUITES RIGIDES ET / OU FLEXIBLES

(43) Veröffentlichungstag der Anmeldung: 14.04.2021
(73) Patentinhaber: Lüdecke GmbH, 92224 Amberg (DE)
(72) Erfinder: SCHNELLINGER, Reinhold, 92224 Amberg (DE); WEISS, Sebastian, 92224 Amberg (DE)
(74) Vertreter: Benninger, Johannes

(56) Entgegenhaltungen:
- EP-A1- 3 040 595
- DE-A1-102013 007 301
- DE-A1-102014 107 530
- DE-U1- 29 608 844
- .: "Assembly instructions hansgrohe 28346000", , 31 August 2019 (2019-08-31), pages 1-2, XP055944026, Retrieved from the Internet: URL:https://assets.hansgrohe.com/mam/celum /celum_assets/16__hrgh0382_pdf.pdf?_gl=1*r 0hpol*_ga*MjE0MTA0NDA1MC4xNjU4MjE5Nzg3*_gi d*NDk4MzM1MTQ2LjE2NTgyMTk3ODc.*_fplc*QzR2Y jJjN2ZuTDNwa3NocEZQRzlXbnNobGxuOWVWanRzU0F vS1c0RXJHZjMzc1FiJTJGJTJCNGclMkZRTHgxd1d1W TB1RHNqNkVWREtIUkpuYUVTeDZFR2lMYjgxVUd4dmd GSElsMHBMd [retrieved on 2022-07-19]
- .: "Quick-coupling set hansgrohe 28346000", , 19 July 2022 (2022-07-19), pages 1-1, XP055944033, Retrieved from the Internet: URL:https://www.hansgrohe.com/datasheet/pr oduct/hansgrohe/28346000 [retrieved on 2022-07-19]

## Beschreibung

Die vorliegende Erfindung betrifft ein Kupplungssystem für Schlauch- und/oder Rohrleitungen und ein Verfahren zur Handhabung eines Kupplungssystems für Schlauch- und/oder Rohrleitungen.

Sollen Schlauch- und Rohrleitungen, wie sie beispielsweise im Bereich der Spritzgusstechnik Verwendung finden, miteinander verbunden werden, so sind hierzu aus dem Stand der Technik Schnellverschlusssysteme bekannt, die sich aus einer Kupplung und einem Nippel zusammensetzen. Die Rohr- und Schlauchleitungen können an die Kupplung angesteckt werden, wobei die Kupplung hierzu einen Befestigungsansatz und einen Steckerteil besitzen kann, auf welche die entsprechenden Rohr- und Schlauchleitungen aufgesteckt werden. Um den Nippel von der Kupplung lösen zu können, existieren entsprechende Verriegelungshülsen, die relativ zur Kupplung axial verschoben werden können, wobei die Verbindung zwischen Kupplung und Nippel aufgehoben wird.

Eine derartige Kupplung ist beispielsweise aus dem Gebrauchsmuster DE 20 2007 006 090 U1 bekannt. Die Kupplung des DE-Gebrauchsmusters besitzt einen Kupplungsteil sowie eine Verriegelungshülse. Weiter ist ein Rastelement vorhanden, mittels dessen ein Stecker an dem Kupplungsteil fixiert werden kann. Durch eine Bewegung der Verriegelungshülse wird die Rastverbindung gelöst, wobei der Stecker durch Federkraft beaufschlagt automatisch vom Kupplungsteil weggeführt wird.

Die Praxis hat gezeigt, dass bei Kupplungen gemäß dem DE-Gebrauchsmuster nicht immer mit Sicherheit ausgeschlossen werden kann, dass kein Flüssigkeitsstrom die Kupplung während eines Trennens des Steckers vom Kupplungsteil durchströmt. Hierdurch besteht ein gewisses Risiko, dass ein Benutzer während des Trennens des Steckers vom Kupplungsteil durch den Flüssigkeitsstrom, welcher ein hohes Temperaturniveau besitzt, verletzt wird. Wünschenswert wäre es daher, das Risiko einer Verletzung während des Trennens eines Steckers vom Kupplungsteil weiter reduzieren zu können.

Aus der DE 296 08 844 U1 ist zudem eine Rohrverbindung mit einer Temperaturanzeige bekannt. Die Rohrverbindung umfasst ein zylindrisches Gehäuse sowie ein darin angeordnetes Metallrohr. Das Gehäuse ist mit einem transparenten Wandstück versehen und mit einem Außengewinde, wobei entsprechende Dichtungen im Gehäuse 61 an passender Stelle angeordnet werden.

Weiter ist aus der EP 3 040 595 A1 ein Kupplungssystem für Schlauch- und Rohrleitungen bekannt. Das Kupplungssystem umfasst einen Stecknippel und einen Kupplungskörper mit Rastelementen, über die der Stecknippel am Kupplungskörper fixiert ist. Eine Verriegelungshülse wird über eine Zwangsführung beweglich am Kupplungskörper gehalten.

Eine Aufgabe der Erfindung kann darin gesehen werden, ein entsprechendes Kupplungssystems zu Verfügung zu stellen, mit welchem sich das Risiko von Verletzungen weiter reduzieren lässt.

Die obige Aufgabe wird durch ein Kupplungssystem und ein Verfahren gelöst, welche die Merkmale in den unabhängigen Ansprüchen umfassen. Weitere vorteilhafte Ausgestaltungen werden durch die Unteransprüche beschrieben.

Das erfindungsgemäße Kupplungssystem ist vorgesehen zur Verbindung mit Schlauch- und Rohrleitungen und kann beispielsweise im Bereich der Spritzgusstechnik Verwendung finden, um entsprechende Schlauch- und Rohrleitungen fluidisch aneinander zu koppeln. Hierzu umfasst das Kupplungssystem einen Stecknippel und einen Kupplungskörper, in welchen der Stecknippel einsteckbar ist, so dass der Kupplungskörper und der Stecknippel gemeinsam einen Kanal für eine Fluidströmung ausbilden.

Weiter umfasst das Kupplungssystem einen Verriegelungsmechanismus, welcher den Stecknippel bei einem Einstecken in den Kupplungskörper selbständig am Kupplungskörper fixiert und welcher zum Aufheben der Fixierung mechanisch betätigt werden kann. Das Kupplungssystem kann somit als Schnellverschlusskupplung ausgebildet sein. Weiter kann der Verriegelungsmechanismus eine Verriegelungshülse umfassen, die über eine Zwangsführung beweglich am Kupplungskörper gehalten ist. Eine dem Kupplungskörper abgewandte Außenmantelfläche der Verriegelungshülse kann zumindest abschnittsweise eine Profilierung besitzen. Die Zwangsführung kann eine begrenzte axiale Relativbewegung der Verriegelungshülse gegenüber dem Kupplungskörper erlauben bzw. bereitstellen. Insbesondere kann es sein, dass durch eine axiale Bewegung der Verriegelungshülse gegenüber dem Kupplungskörper eine über mehrere Rastelemente hergestellte Fixierung des Stecknippels am Kupplungskörper aufgehoben werden kann. Die mehreren Rastelemente können durch mehrere Rastkugeln ausgebildet sein, die in eine korrespondierende und radial um die Außenmantelfläche des Stecknippels verlaufende Nut eintauchen und den Stecknippel hierbei lösbar am Kupplungskörper festsetzen bzw. fixieren. Denkbar ist hierbei, dass sich die ein oder mehreren Rastelemente bzw. die Rastkugeln bei relativer Bewegung der Verriegelungshülse gegenüber dem Kupplungskörper außer Eingriff mit dem Stecknippel bewegen, so dass der Stecknippel nicht mehr am Kupplungskörper fixiert ist. Die Verriegelungshülse kann hierzu eine Aussparung und/oder Fase aufweisen, in welche die ein oder mehreren Rastelemente bzw. die Rastkugeln bei einer nachfolgend noch beschriebenen zweiten Relativposition bzw. bei Löseposition eintauchen. Insbesondere kann es sein, dass sich die ein oder mehreren Rastelemente bzw. die Rastkugeln bei relativer Bewegung der Verriegelungshülse gegenüber dem Kupplungskörper in Richtung weg des Stecknippels bewegen.

Der Kupplungskörper kann zumindest einen axial beweglichen Druckzylinder aufweisen, der mit einer Druckfeder in Verbindung steht. Ist der Stecknippel durch die ein oder mehreren Rastelemente am Kupplungskörper fixiert, kann die Druckfeder komprimiert sein und der Stecknippel ggf. am Druckzylinder anliegen. Sofern die ein oder mehreren Rastelemente, ggf. durch eine relative axiale Bewegung der Verriegelungshülse gegenüber dem Kupplungskörper, mit dem Stecknippel bzw. mit einer Nut des Stecknippels außer Eingriff gebracht werden, kann der Druckzylinder den Stecknippel über die Druckfeder in Richtung weg des Kupplungskörpers führen, wobei sich die Druckfeder entspannt und der Stecknippel vom Kupplungskörper getrennt wird. Dem Druckzylinder und einer in Richtung des Druckzylinders weisenden Innenmantelfläche des Kupplungskörpers kann wenigstens ein Dichtelement und insbesondere ein O-Ring zwischengeordnet sein. Der Kupplungskörper kann zum Einstecken des Stecknippels eine stirnseitige Öffnung besitzen.

Das Kupplungssystem bzw. der Verriegelungsmechanismus kann eine Zwangsführung umfassen, über welche Zwangsführung die Verriegelungshülse gegenüber dem Kupplungskörper in eine erste Relativposition bzw. Verriegelungsposition überführbar ist, bei welcher der Stecknippel ggf. über die mehreren Rastelemente am Kupplungskörper fixiert ist. Weiter kann es sein, dass die Verriegelungshülse gegenüber dem Kupplungskörper mittels der Zwangsführung in eine zweite Relativposition bzw. Ausgangsposition überführbar ist, bei welcher die Fixierung zwischen den ein oder mehreren Rastelementen und dem Stecknippel aufgehoben ist.

Vorstellbar ist, dass von der Verriegelungsposition in die Ausgangsposition lediglich gewechselt werden kann, sofern die Stellkraft einer Feder überwunden wird.

Wenigstens eine Feder kann somit Bestandteil des erfindungsgemäßen Kupplungssystems sein. Die wenigstens eine Feder kann mit dem Kupplungskörper und der Verriegelungshülse in Verbindung stehen und die Verriegelungshülse gegenüber dem Kupplungskörper zum selbständigen Wechsel aus der zweiten Relativposition bzw. Ausgangsposition in die erste Relativposition bzw. Verriegelungsposition mit axialer Stellkraft und einem Drehmoment beaufschlagen. Somit kann die Feder bei eingenommener zweiter Relativposition bzw. Ausgangsposition die Verriegelungshülse gegenüber dem Kupplungskörper mit axialer Stellkraft und einem Drehmoment beaufschlagen. Insbesondere kann es hierbei sein, dass aus einem Einstecken des Stecknippels in den Kupplungskörper resultierend die axiale Stellkraft und das Drehmoment zumindest teilweise abgebaut werden bzw. dass ein Einstecken des Stecknippels in den Kupplungskörper einen Wechsel aus der zweiten Relativposition bzw. Ausgangsposition in die erste Relativposition bzw. Verriegelungsposition unter Zuhilfenahme der Feder automatisch bzw. selbständig bewirkt.

Beispielsweise können die mehreren Rastelemente eine relative Bewegung der Verriegelungshülse gegenüber dem Kupplungskörper in der zweiten Relativposition bzw. Ausgangsposition sperren. Weiter können die ein oder mehreren Rastelemente bzw. die Rastkugeln bei Einstecken des Stecknippels in den Kupplungskörper in eine radiale Nut des Stecknippels eintauchen, wobei die Sperrung aufgehoben ist. Da die Verriegelungshülse gegenüber dem Kupplungskörper durch die Feder ggf. mit axialer Stellkraft und einem Drehmoment beaufschlagt ist, kann unmittelbar nach Aufheben der Sperrung automatisch von der zweiten Relativposition bzw. Ausgangsposition in die erste Relativposition bzw. Verriegelungsposition gewechselt werden. Eine händische Sicherung der Verriegelungshülse gegen unbeabsichtigte Betätigung ist hierbei nicht mehr notwendig. Vielmehr wird die Sicherung mittels eines Einsteckens des Stecknippels in den Kupplungskörper und einem hiermit selbständig einhergehenden Wechsel von der zweiten Relativposition bzw. Ausgangsposition in die erste Relativposition bzw. Verriegelungsposition bewirkt.

Denkbar ist zudem, dass die vorherig bereits beschriebene Zwangsführung durch eine S-förmige Nut bzw. L-förmige Nut in der Verriegelungshülse ausgebildet ist, durch welche ein fest mit dem Kupplungskörper in Verbindung stehender Zapfen greift. Sofern die Zwangsführung als S-förmige Nut ausgebildet ist, kann die S-förmige Nut wenigstens zwei Schenkel besitzen, die parallel zur Längsachse der Verriegelungshülse verlaufen. Befindet sich der Zapfen in einem Endbereich der S-förmigen Nut, kann die Verriegelungshülse gegenüber dem Kupplungskörper in die erste oder zweite Relativposition überführt sein. Auch können die wenigstens zwei Schenkel durch einen Abschnitt der S-förmigen Nut miteinander verbunden sein, welcher Abschnitt orthogonal zu den beiden Schenkeln verläuft. Der Abschnitt der S-förmigen Nut, welcher die Schenkel miteinander verbindet, kann somit entlang der Längsachse der Verriegelungshülse orientiert sein. Befindet sich der Zapfen im Bereich des Abschnittes, so kann zwischen dem Abschnitt und dem Zapfen zumindest ein geringes Spiel senkrecht zur Längsachse der Verriegelungshülse ausgebildet sein.

Insbesondere kann es sein, dass die erste Relativposition bzw. Verriegelungsposition und die zweite Relativposition bzw. Ausgangsposition dann ausgebildet sind, wenn sich der Zapfen in einem jeweiligen Endbereich der wenigstens zwei Schenkel befindet. Die Endpositionen können somit in axialer Richtung sowie in Umfangsrichtung versetzt an der Verriegelungshülse ausgebildet sein.

Weiter kann es sein, dass die vorherig bereits beschriebene wenigstens eine Feder in einem zwischen dem Kupplungskörper und der Verriegelungshülse ausgebildetem Hohlraum aufgenommen ist. Der Hohlraum kann als Ringspalt zwischen dem Kupplungskörper und der Verriegelungshülse ausgebildet sein. Somit kann der Hohlraum bzw. der Ringspalt vollständig um den Kupplungskörper verlaufen.

Weiter kann es sein, dass die wenigstens eine Feder eine Windungszahl größer oder gleich 3 besitzt. Derartige Ausführungsformen haben sich bewährt, um den Aufbau des Kupplungssystems kompakt zu halten und sicher zwischen den beiden Relativpositionen wechseln zu können.

Es ist zudem vorstellbar, dass die wenigstens eine Feder mit dem Kupplungskörper und der Verriegelungshülse derart in Verbindung steht, dass ihre axiale Stellkraft sowie ihre Drehmomentbeaufschlagung der Verriegelungshülse gegenüber dem Kupplungskörper in der ersten Relativposition bzw. Verriegelungsposition vollständig oder zumindest näherungsweise vollständig aufgehoben sind.

In denkbaren Ausführungsformen kann es sein, dass über eine erste Feder eine axiale Stellkraft der Verriegelungshülse gegenüber dem Kupplungskörper bewirkt wird und über eine zweite Feder eine Drehmomentbeaufschlagung der Verriegelungshülse gegenüber dem Kupplungskörper bewirkt wird. In bevorzugten Ausführungsformen kann jedoch eine bzw. genau eine Feder vorgesehen sein, welche eine Feder zum selbständigen Wechsel aus der zweiten Relativposition bzw. Ausgangsposition in die erste Relativposition bzw. Verriegelungsposition die Verriegelungshülse gegenüber dem Kupplungskörper mit axialer Stellkraft und einem Drehmoment beaufschlagt.

Der Kupplungskörper kann zur Befestigung einer Schlauch- und/oder Rohrleitung ausgebildet sein, wobei der Kupplungskörper einen sich ggf. verjüngenden Fortsatz besitzt, auf welchen eine jeweilige Schlauch- und/oder Rohrleitung aufgesteckt werden kann.

Der Stecknippel kann zur Befestigung einer weiteren Schlauch- und/oder Rohrleitung ausgebildet sein und einen Kopf besitzen, der einen Außensechskant umfasst. Ist der Stecknippel am Kupplungskörper fixiert, kann der Stecknippel zumindest abschnittsweise in den Kupplungskörper eintauchen. Der Kopf des Stecknippels kann hierbei außerhalb des Kupplungskörpers angeordnet sein.

Bei dem erfindungsgemäßen Kupplungssystem ist zudem vorgesehen, dass das Kupplungssystem zur Ausgabe einer optischen Information ausgebildet ist, welche optische Information ein jeweiliges Temperaturniveau des jeweiligen im Kanal aufgenommenen Fluides abbildet.

Bei dem Kupplungssystem kann es sein, dass unterschiedlichen Temperaturniveaus unterschiedliche Farben zugeordnet sind und dass die jeweilige optische Information über das jeweilige Temperaturniveau des jeweiligen im Kanal aufgenommenen Fluides als jeweilige Farbe ausgebbar ist, welche dem jeweiligen Temperaturniveau zugeordnet ist.

Bewährt hat es sich, wenn die optische Information, welche ein jeweiliges Temperaturniveau des jeweiligen im Kanal aufgenommenen Fluide abbildet, auf einer Außenmantelfläche des Stecknippels darstellbar ist bzw. auf einer Außenmantelfläche des Stecknippel dargestellt wird. Alternativ oder ergänzend hierzu kann vorgesehen sein, dass die optische Information, welche ein jeweiliges Temperaturniveau des jeweiligen im Kanal aufgenommenen Fluides abbildet, auf einer Außenmantelfläche des Kupplungskörpers darstellbar ist bzw. dargestellt wird. Alternativ oder ergänzend hierzu kann vorgesehen sein, dass die optische Information, welche ein jeweiliges Temperaturniveau des jeweiligen im Kanal aufgenommenen Fluides abbildet, auf einer Außenmantelfläche einer als Bestandteil des Verriegelungsmechanismus ausgebildeten Verriegelungshülse, welche zum Aufheben der Fixierung in axialer Richtung bewegbar ist, darstellbar ist bzw. dargestellt wird. Eine solche Verriegelungshülse kann gemäß der vorherigen Beschreibung ausgebildet sein.

Die Erfindung sieht vor, dass das Kupplungssystem über mindestens eine thermochromatische Substanz verfügt, unter Zuhilfenahme welcher mindestens einen thermochromatischen Substanz das Kupplungssystem zur Ausgabe der optischen Information ausgebildet ist, welche optische Information das Temperaturniveau des jeweiligen im Kanal aufgenommenen Fluides abbildet. Die Erfindung sieht vor, dass die thermochromatische Substanz als thermochromatischer Farb- und/oder Lackauftrag ausgebildet ist. Beispielsweise kann die thermochromatische Substanz auf einen bestimmten Bereich des Kupplungskörpers als thermochromatischer Farb- und/oder Lackauftrag aufgebracht sein.

Die Erfindung sieht vor, dass der mindestens eine thermochromatische Farb- und/oder Lackauftrag oberhalb eines weiteren Farb- und/oder Lackauftrages angeordnet ist. Der weitere Farb- und/oder Lackauftrag kann vorzugsweise keine thermochromatischen Eigenschaften besitzen.

Erfindungsgemäß ist der mindestens eine thermochromatische Farb- und/oder Lackauftrag derart ausgebildet, dass dieser bei Überschreiten einer definierten Temperatur in einen transparenten Zustand wechselt. Der transparente Zustand ist derart ausgebildet, dass der unterhalb des mindestens einen thermochromatischen Farb- und/oder Lackauftrages angeordnete weitere Farb- und/oder Lackauftrag optisch erkennbar ist.

Wie voranstehend bereits erwähnt, hat es sich bewährt, wenn der Verriegelungsmechanismus eine Verriegelungshülse umfasst, die zum Aufheben einer zwischen dem Stecknippel und dem Kupplungskörper ausgebildeten Fixierung in axialer Richtung betätigt werden kann. Hierbei kann es sein, dass sich die Verriegelungshülse bei fehlender Fixierung des Stecknippels am Kupplungskörper in einer Ausgangsposition befindet und bei Einstecken des Stecknippels in den Kupplungskörper vorzugsweise selbständig aus der Ausgangsposition in eine Verriegelungsposition wechselt, welche Verriegelungsposition gegenüber der Ausgangsposition in axialer Richtung versetzt ist. Weiter kann es sein, dass die optische Information, welche optische Information ein jeweiliges Temperaturniveau des jeweiligen im Kanal aufgenommenen Fluides abbildet, erkennbar ist, sofern sich die Verriegelungshülse in der Verriegelungsposition befindet. Weiter kann die optische Information, welche optische Information ein jeweiliges Temperaturniveau des jeweiligen im Kanal aufgenommenen Fluides abbildet, von der Verriegelungshülse zumindest anteilig oder im Wesentlichen vollständig verdeckt werden, sofern die Verriegelungshülse ihre Ausgangsposition eingenommen hat.

Es kann sein, dass der Verriegelungsmechanismus über eine Zwangsführung verfügt, die durch eine Nut in der Verriegelungshülse ausgebildet ist, durch die ein fest mit dem Kupplungskörper in Verbindung stehender Zapfen greift, welcher bei einem Wechsel der Verriegelungshülse aus der Ausgangsposition in die Verriegelungsposition und bei einem Wechsel aus der Verriegelungsposition in die Ausgangsposition jeweils in der Nut geführt ist. Bei solchen Ausführungsformen ist vorstellbar, dass die optische Information, welche optische Information ein jeweiliges Temperaturniveau des jeweiligen im Kanal aufgenommenen Fluides abbildet, im Bereich der durch die Verriegelungshülse ausgebildeten Nut erkennbar ist, sofern sich die Verriegelungshülse in der Verriegelungsposition befindet. Zudem kann es sein, dass die optische Information, welche optische Information ein jeweiliges Temperaturniveau des jeweiligen im Kanal aufgenommenen Fluides abbildet, von der Verriegelungshülse zumindest anteilig oder im Wesentlichen vollständig verdeckt wird, sofern die Verriegelungshülse ihre Ausgangsposition eingenommen hat.

Die Erfindung betrifft darüber hinaus ein Verfahren zur Handhabung eines Kupplungssystems für Schlauch- und/oder Rohrleitungen. Merkmale, welche vorhergehend bereits zu diversen Ausführungsformen des Kupplungssystems beschrieben wurden, können ebenso für die nachfolgend beschriebenen Ausführungsformen des erfindungsgemäßen Verfahrens Verwendung finden und werden nicht erneut bzw. redundant erwähnt. Ebenso können die nachfolgend beschriebenen Merkmale, welche diverse Ausführungsformen des erfindungsgemäßen Verfahrens betreffen, bei diversen Ausführungsformen des vorhergehend bereits beschriebenen Kupplungssystems vorgesehen sein.

Ein erster Schritt des Verfahrens betrifft ein Einstecken eines Stecknippels in einen Kupplungskörper, woraus resultierend der Stecknippel über den Verriegelungsmechanismus selbständig am Kupplungskörper fixiert wird. Zeitlich hierauf erfolgt eine Bewegung einer Fluidströmung durch einen Kanal, welchen der Kupplungskörper und der in den Kupplungskörper eingesteckte Stecknippel ausbilden. Zeitlich hierauf erfolgt bei dem Verfahren ein Betätigen des Verriegelungsmechanismus, womit einhergehend die Fixierung des Stecknippels am Kupplungskörper gelöst und der Stecknippel vom Kupplungskörper getrennt wird.

Bei dem Verfahren ist vorgesehen, dass das Kupplungssystem eine Information über ein Ist-Temperaturniveau eines im Kanal aufgenommenen Fluides optisch abbildet und dass das Trennen des Stecknippels vom Kupplungskörper zu einem Zeitpunkt erfolgt, bei welchem das jeweilige über die Information optisch abgebildete Ist-Temperaturniveau einem vorgegebenen Soll-Temperaturniveau entspricht.

Bewährt hat es sich, wenn unterschiedlichen Temperaturniveaus unterschiedliche Farben zugeordnet werden. Das jeweilige Ist-Temperaturniveau eine im Kanal aufgenommenen Fluides kann sodann über eine Darstellung der dem jeweiligen Ist-Temperaturniveau zugeordneten Farbe optisch abgebildet werden.

Es kann sein, dass das jeweilige über die Information optisch abgebildete Ist-Temperaturniveau über den Zeitverlauf überwacht wird und bedarfsweise geregelt wird, sofern das Ist-Temperaturniveau und das Soll-Temperaturniveau nicht identisch ausgebildet sind bzw. sofern das Ist-Temperaturniveau vom Soll-Temperaturniveau abweichst. Derartige Ausführungsformen bringen Verbesserungen im Hinblick auf eine Prozessstabilität mit sich.

Erfindungsgemäß verfügt das Kupplungssystem über eine thermochromatische Substanz, welche als thermochromatischer Farb- und/oder Lackauftrag ausgebildet ist und über welche die Information über das Ist-Temperaturniveau des im Kanal aufgenommenen Fluides optisch abgebildet wird.

Auch kann es sein, dass das Kupplungssystem eine Verriegelungshülse umfasst, welche bei Einstecken des Stecknippels in den Kupplungskörper selbständig aus einer Arbeitsposition in eine Verriegelungsposition wechselt. Hierbei kann es sein, dass ein Bereich des Kupplungssystems, innerhalb dessen die Information über ein Ist-Temperaturniveau des im Kanal aufgenommenen Fluides optisch abgebildet wird, von der Verriegelungshülse in der Ausgangsposition verdeckt wird und bei einem Wechsel aus der Ausgangsposition in die Verriegelungsposition freigelegt wird.

Denkbar ist, dass das Kupplungssystem eine Zwangsführung umfasst, die durch eine Nut in der Verriegelungshülse ausgebildet ist, durch welche ein fest mit dem Kupplungskörper in Verbindung stehender Zapfen greift. Der Zapfen kann bei einem Wechsel der Verriegelungshülse aus der Ausgangsposition in die Verrieglungsposition und bei einem Wechsel aus der Verrieglungsposition in die Ausgangsposition jeweils in der Nut geführt werden. Im Rahmen des Verfahrens kann es sein, dass der Bereich des Kupplungssystem, innerhalb dessen die Information über ein Ist-Temperaturniveau des im Kanal aufgenommenen Fluides optisch abgebildet wird, von der Verriegelungshülse in der Ausgangsposition verdeckt wird und bei einem Wechsel der Verriegelungshülse von der Ausgangsposition in die Verriegelungsposition im Bereich der Nut, welche in der Verriegelungshülse ausgebildet ist, freigelegt wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische dreidimensionale Schnittdarstellung einer Ausführungsform eines erfindungsgemäßen Kupplungssystems;
Figur 2 zeigt die Ausführungsform eines Kupplungssystems gemäß Figur 1 im Längsschnitt;
Figur 3 zeigt eine weitere Darstellung der Ausführungsform eines Kupplungssystems aus den Figuren 1 und 2 im Teilschnitt;
Figur 4 zeigt eine schematische dreidimensionale Schnittdarstellung der Ausführungsform eines Kupplungssystems gemäß Figuren 1 bis 3 ohne Stecknippel;
Figur 5 zeigt die Ausführungsform eines Kupplungssystems ohne Stecknippel aus Figur 4 im Längsschnitt;
Figur 6 zeigt eine Darstellung der Ausführungsform eines Kupplungssystems ohne Stecknippel aus den Figuren 4 und 5 im Teilschnitt;
Figur 7 zeigt einen Kupplungskörper gemäß der Ausführungsform nach Figuren 1 bis 6 teilweise schematisch im Längsschnitt;
Figur 8 zeigt im Flussdiagramm einzelne Schritte, wie sie bei diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

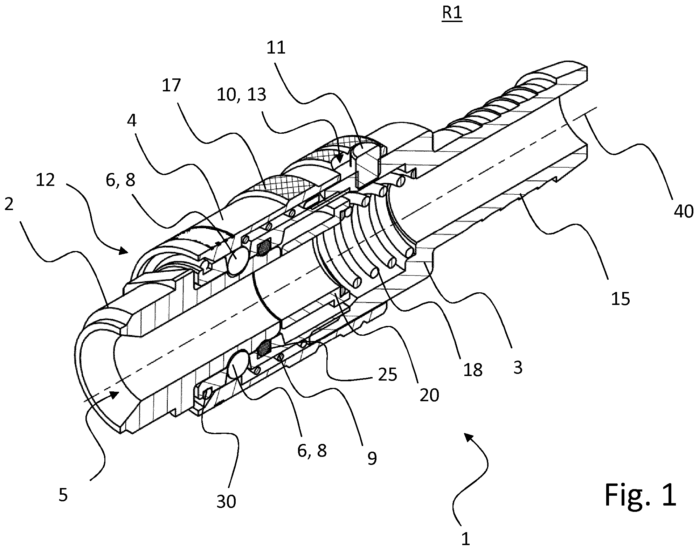

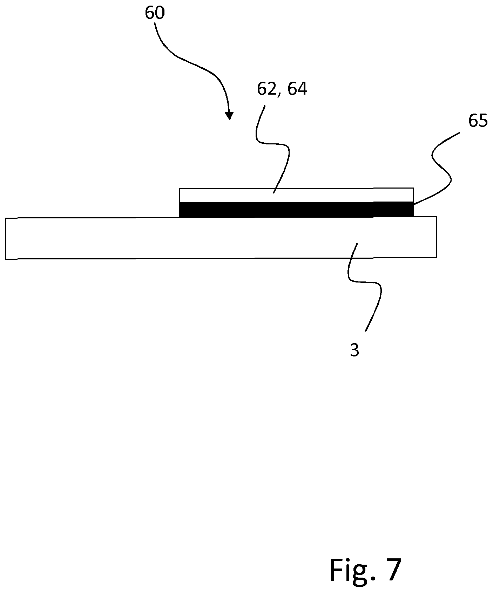

**Figur 1** zeigt eine schematische dreidimensionale Schnittdarstellung einer Ausführungsform eines erfindungsgemäßen Kupplungssystems 1. Mittels des Kupplungssystems 1 gemäß den nachfolgenden Ausführungsbeispielen können diverse Ausführungsformen des erfindungsgemäßen Verfahrens 100 (vgl. Figur 7) umgesetzt werden.

Mittels des Kupplungssystems 1 werden Schlauchleitungen, wie sie beispielsweise im Bereich der Spritzgusstechnik Verwendung finden, miteinander verbunden. Eine in den Figuren nicht mit dargestellte Schlauchleitung ist hierbei auf einen als Bestandteil des Kupplungskörpers 3 ausgebildeten Fortsatz 15 aufgesetzt und kann beispielsweise als Schlauch ausgebildet sein, welcher Flüssigkeit führt, die eine hohe Temperatur besitzt. Die Temperatur der Flüssigkeit kann hierbei mehr als 50°C betragen.

Am gegenüberliegenden freien Endbereich besitzt das Kupplungssystem 1 einen Stecknippel 2, auf welchen eine weitere Schlauchleitung aufgesetzt werden kann. Über das Kupplungssystem 1 können somit zwei Schlauch- bzw. Rohrleitungen aneinandergekoppelt und fluidisch miteinander verbunden werden.

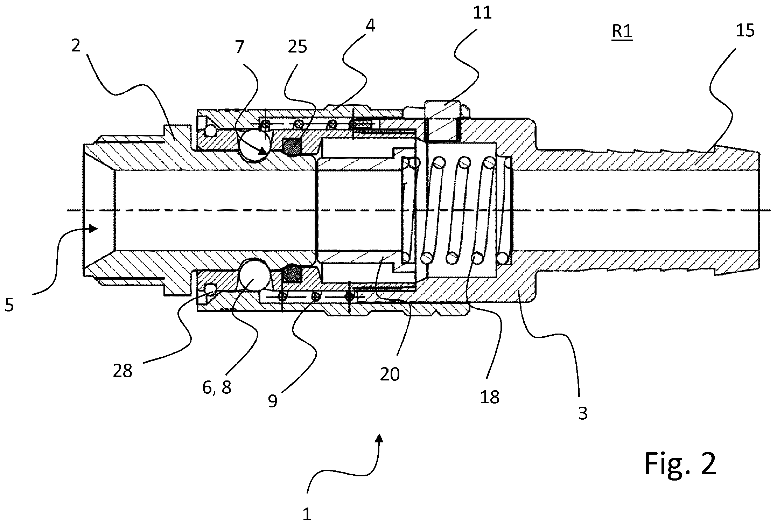

Der Stecknippel 2 ist lösbar am Kupplungskörper 3 gehalten. Hierzu gelangen bei Einstecken des Stecknippels 2 in den Kupplungskörper 3 mehrerer Rastelemente 6, welche als Rastkugeln 8 ausgebildet sind, mit dem Stecknippel 2 in Eingriff bzw. tauchen in eine korrespondierende Nut 7 (vgl. Figur 2) des Stecknippels 2 ein. Die Rastelemente 6 bzw. Rastkugeln 8 sind Bestandteil eines Verriegelungsmechanismus 12, über welchen der Stecknippel 2 am Kupplungskörper 3 lösbar gehalten werden kann. Die Nut 7 verläuft radial um die Längsachse des Stecknippels 2. Ist der Stecknippel 2, wie in Figur 1 gezeigt, in den Kupplungskörper 3 eingesteckt, so bilden der Stecknippel 2 und der Kupplungskörper 3 gemeinsam einen Kanal 5, welchen eine Fluidströmung passieren kann. Der Kanal 5 erstreckt sich hierbei entlang der Längsachse 40 des Kupplungssystems 1 durch das gesamte Kupplungssystem 1 hindurch.

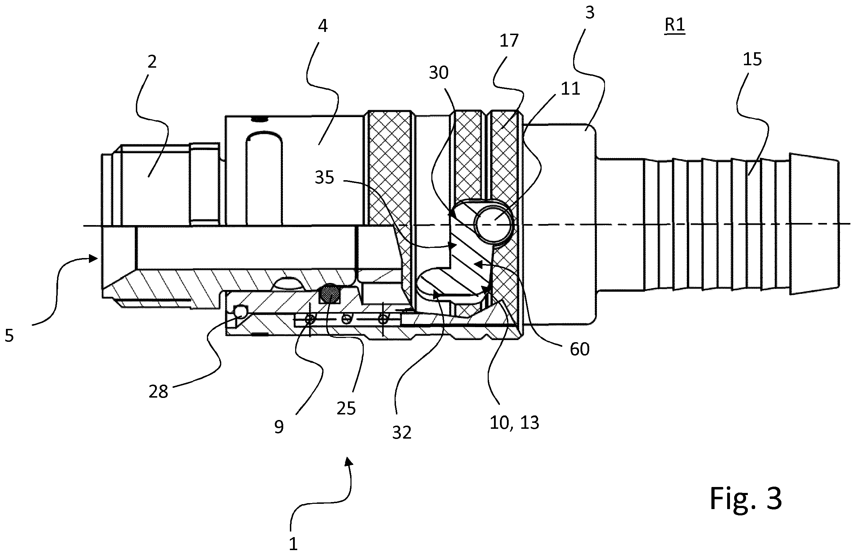

Weiter umfasst der Verriegelungsmechanismus 12 des Kupplungssystems 1 eine Verriegelungshülse 4, die auf dem Kupplungskörper 3 verschiebbar aufsitzt. Zudem ist eine Zwangsführung 10 dargestellt, die auch in Figur 3 sehr gut zu erkennen ist und über welche Zwangsführung 10 eine relative Bewegung der Verriegelungshülse 4 gegenüber dem Kupplungskörper 3 vorgegeben wird. Hierzu taucht ein Zapfen 11 in die als S-förmige Nut 13 ausgebildete Zwangsführung 10 ein. Der Zapfen 11 ist fest mit den Kupplungskörper 3 verbunden. Die S-förmige Nut 13 ist Bestandteil der Verriegelungshülse 4.

Über die Zwangsführung 10 ist die Verriegelungshülse 4 gegenüber dem Kupplungskörper 3 in eine erste Verriegelungsposition R1 überführbar, bei welcher der Stecknippel 2 über die als Bestandteil des Verriegelungsmechanismus 12 ausgebildeten Rastelemente 6 bzw. die Rastkugeln 8 am Kupplungskörper 3 fixiert ist. Auch ist die Verriegelungshülse 4 gegenüber dem Kupplungskörper 3 mittels der Zwangsführung 10 in eine zweite Ausgangsposition R2 überführbar, bei welcher die Fixierung zwischen den ein oder mehreren Rastelementen 6 bzw. den Rastkugeln 8 und dem Stecknippel 2 aufgehoben ist. Der Stecknippel 2 kann hierdurch vom Kupplungskörper 3 getrennt werden.

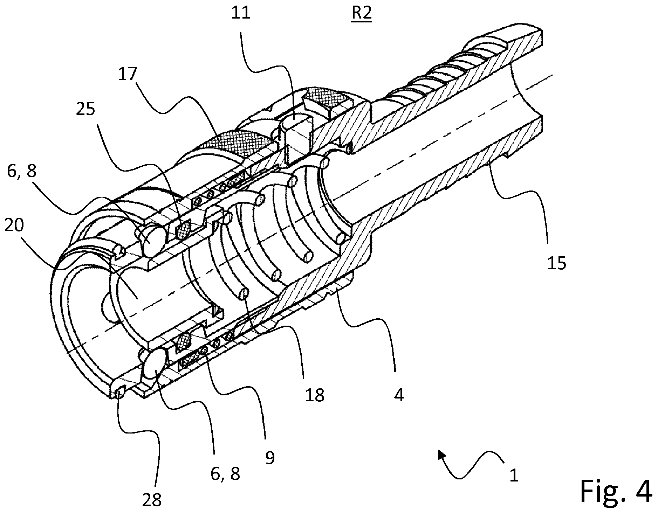

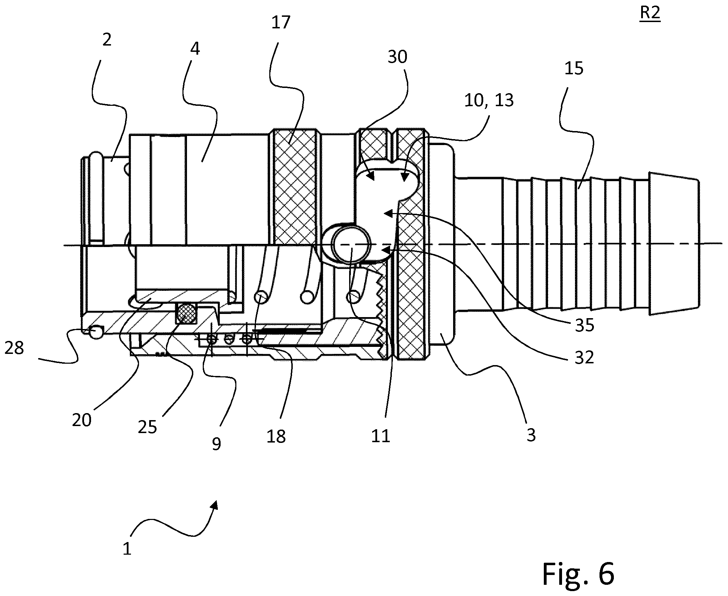

Die erste Verriegelungsposition R1 ist hierbei in den Figuren 1 bis 3 dargestellt, hingegen ist die zweite Ausgangsposition R2 in den Figuren 4 bis 6 zu erkennen. Wie insbesondere eine Zusammenschau der Figuren 3 und 6 zeigt, ist der Zapfen 11 bei erster Verriegelungsposition R1 in einem ersten Endbereich der S-förmigen Nut 13 positioniert, während der Zapfen 11 bei zweiter Ausgangsposition R2 in einem zweiten Endbereich der S-förmigen Nut 13 positioniert ist. Der erste Endbereich und der zweite Endbereich sind axial und in Umfangsrichtung an der Verriegelungshülse 4 versetzt zueinander angeordnet.

Das Kupplungssystem 1 umfasst zudem eine Feder 9, die mit einem freien Ende an den Kupplungskörper 3 und mit ihrem gegenüberliegenden freien Ende an die Verriegelungshülse 4 mechanisch gekoppelt ist. In der zweiten Ausgangsposition R2 (vgl. Figuren 4 bis 6) beaufschlagt die Feder 9 die Verriegelungshülse 4 gegenüber dem Kupplungskörper 3 mit axialer Stellkraft sowie mit einem Drehmoment.

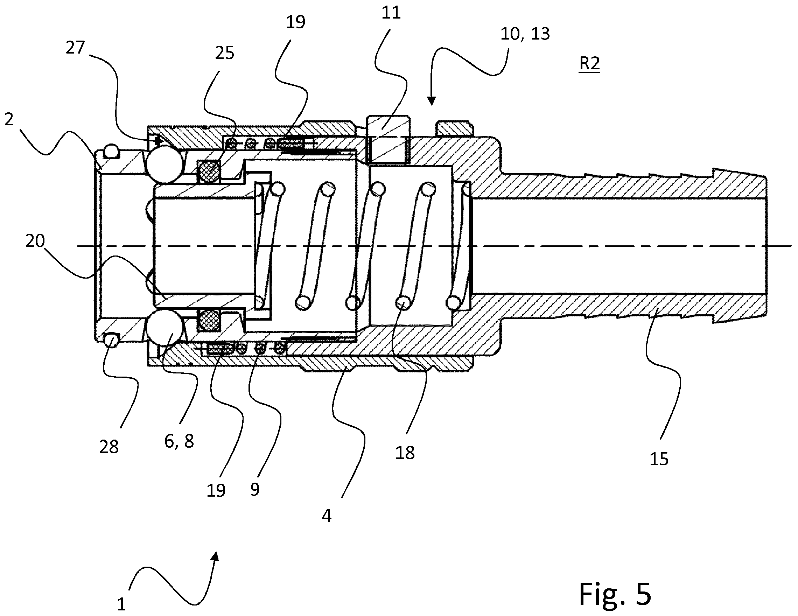

Figur 5 lässt erkennen, dass die Verriegelungshülse 4 eine Fase 27 besitzt, die in der zweiten Ausgangsposition R2 an den Rastelementen 6 bzw. den Rastkugeln 8 anliegt. Wird der Stecknippel 2 in den Kupplungskörper 3 geführt, so bewegen sich die Rastelemente 6 bzw. die Rastkugeln 8 kraftbeaufschlagt gegen die Fase 27, wobei die Verriegelungshülse 4 gegenüber dem Kupplungskörper 3 geringfügig axial versetzt wird. Figuren 3 und 6 lassen besonders gut erkennen, dass sich die Zwangsführung 10 bzw. die S-förmige Nut 13 aus zwei parallel zueinander verlaufenden Schenkeln 30 und 32 und einem Abschnitt 35 zusammensetzt, der die beiden Schenkel 30 und 32 miteinander verbindet. Durch den geringfügigen axialen Versatz wird der Zapfen 11 bei Einstecken des Stecknippels 2 aus der in Figur 6 gezeigten Position im Schenkel 32 in Richtung des Abschnitts 35 bewegt, bis er diesen erreicht. Hierauf wirkt zunächst die Drehmomentbeaufschlagung der Feder 9 derart auf die Verriegelungshülse 4 und den Kupplungskörper 3, dass der Zapfen 11 selbständig und ohne manuelle Verdrehung in Richtung des Schenkels 30 wandert bzw. selbständig in Richtung des Schenkels 30 geführt ist. Da der Zapfen 11 fest mit dem Kupplungskörper 3 in Verbindung steht, wird die selbständige Bewegung des Zapfens 11 in Richtung des Schenkels 30 durch relative Bewegung der Verriegelungshülse 4 gegenüber dem Kupplungskörper 3 bewirkt. Da die Feder 9 die Verriegelungshülse 4 gegenüber dem Kupplungskörper 3 mit axialer Stellkraft beaufschlagt, bewegt sich der Zapfen 11 bei Erreichen des Schenkels 30 selbständig und ohne händischen Versatz in die Position gemäß Figuren 1 bis 3. Die Verriegelungshülse 4 und der Kupplungskörper 3 sind nun durch Einstecken des Stecknippels 2 in den Kupplungskörper 3 automatisch in die erste Relativposition R1 überführt.

Wie aus der Ansicht gemäß Figur 3 verständlich wird, unterbindet der Zapfen 11 in der ersten Relativposition R1, bei welcher der Stecknippel 2 in den Kupplungskörper 3 eingesteckt ist, eine relative Verdrehung der Verriegelungshülse 4 gegenüber dem Kupplungskörper 3. Ein unbeabsichtigtes Lösen des Stecknippels 2 von dem Kupplungskörper 3 bzw. ein unbeabsichtigtes Überführen in die zweite Relativposition R2 gemäß Figuren 4 bis 6 kann hierdurch ausgeschlossen werden.

Ein Überführen der Verriegelungshülse 4 gegenüber dem Kupplungskörper 3 von der ersten Relativposition R1 in die zweite Relativposition R2 erfolgt durch manuelle Bewegung der Verriegelungshülse 4 gegenüber dem Kupplungskörper 3. Ausgehend von der ersten Relativposition R1, bei welcher, wie in Figur 3 gut zu erkennen, der Zapfen 11 im Schenkel 30 bzw. in einem Endbereich der S-förmigen Nut 10 positioniert ist, wird die Verrieglungshülse 4 gegenüber dem Kupplungskörper 3 zunächst geringfügig axial versetzt, bis der Zapfen 11 in den Abschnitt 35 gelangt. Hierbei wird die Feder 9 komprimiert.

Hierauf folgend kann die Verriegelungshülse 4 gegenüber dem Kupplungskörper 3 manuell verdreht werden, wobei der Zapfen 11 über den Abschnitt 35 wandert und sich in Richtung des Schenkels 32 bewegt. Hierbei wird die Feder 9 auf Torsion beansprucht und kann, sofern wiederum ein Wechsel aus der zweiten Relativposition R2 in die erste Relativposition R1 erfolgen soll, die Verriegelungshülse 4 gegenüber dem Kupplungskörper 3 selbständig verdrehen.

Abschließend wird die Verriegelungshülse 4 gegenüber dem Kupplungskörper 3 zurückgezogen bzw. relativ gegenüber dem Kupplungskörper 3 und in axialer Richtung bewegt, wobei der Zapfen 11 im Schenkel 32 wandert und in die Position gemäß Figuren 4 bis 6 überführt wird. Hierbei löst sich die Verbindung zwischen den Rastelementen 6 bzw. den Rastkugeln 8 und dem Stecknippel 2, so dass der Stecknippel 2 nicht mehr am Kupplungskörper 3 fixiert ist.

Wie insbesondere in den Figuren 1 und 2 zu erkennen, steht der Stecknippel 2 bei erster Verriegelungsposition R1 in Anlage mit einem Druckzylinder 20, der wiederum mittels der Druckfeder18 kraftbeaufschlagt gegen den Stecknippel 2 geführt ist. Sofern die Fixierung des Stecknippels 2 über die Rastelemente 6 bzw. über die Rastkugeln 8 aufgehoben wird, bewegt der Druckzylinder 20 den Stecknippel 2 über die Druckfeder 18 nach außen bzw. in Richtung weg des Kupplungskörpers 3.

Figur 2 zeigt die Ausführungsform eines Kupplungssystems 1 gemäß Figur 1 im Längsschnitt. In Figur 2 ist die Position der Feder 9 gut zu erkennen. So ist diese in einem Hohlraum aufgenommen, der zwischen der Verriegelungshülse 4 und dem Kupplungskörper 3 ausgebildet ist. Auch lässt Figur 2 erkennen, dass die Druckfeder 18 in der ersten Verriegelungsposition R1 den Stecknippel 2 nicht nach außen bzw. in Richtung weg des Kupplungskörpers 3 bewegen kann, da der Stecknippel 2 über die Rastelemente 6 bzw. die Rastkugeln 8 am Kupplungskörper 3 gehalten ist. Um den Stecknippel 2 über den Druckzylinder 20 bzw. über die Druckfeder 18 in Richtung weg des Kupplungskörpers 3 zu bewegen, muss zunächst der Eingriff zwischen den Rastelementen 6 bzw. den Rastkugeln 8 und dem Stecknippel 2 aufgehoben werden. Dies erfolgt durch Wechsel aus der ersten Verriegelungsposition R1 in die zweite Ausgangsposition R2, wozu die Verriegelungshülse 4 gegenüber dem Kupplungskörper 3 bewegt wird. Zum Zwecke einer fluidischen Abdichtung steht mit den Kupplungskörper 3 und dem Stecknippel 2 in der ersten Verriegelungsposition R1 ein O-Ring 25 in Anlage. Weiter umfasst das Kupplungssystem 1 ein ringförmiges Anschlagelement 28, das in der in Figur 2 gezeigten ersten Verriegelungsposition R1 an der Verriegelungshülse 4 anliegt und in der zweiten Ausgangsposition R2 gegenüber der Verriegelungshülse 4 beabstandet ist.

Figur 3 zeigt eine weitere Darstellung der Ausführungsform eines Kupplungssystems 1 aus den Figuren 1 und 2 im Teilschnitt. Hierbei lässt Figur 3 erkennen, dass die Verriegelungshülse 4 an ihrer Außenmantelfläche eine Profilierung 17 besitzt, die zur besseren Handhabung bzw. zum vereinfachten manuellen Überführen der Verriegelungshülse 4 gegenüber dem Kupplungskörper 3 in die zweite Ausgangsposition R2 (vgl. Figuren 4 bis 6) dient. Auch ist in Figur 3 nochmals die S-förmig Nut 13 mit ihren parallel zueinander verlaufenden Schenkeln 30 und 32 und dem Abschnitt 35, welcher die Schenkel 30 und 32 verbindet, zu erkennen. Der Öffnungsquerschnitt des ersten Schenkels 30 ist gegenüber dem Öffnungsquerschnitt 32 geringfügig vergrößert ausgebildet, so dass der Zapfen 11 im ersten Schenkel 30 ein geringes Spiel besitzt.

Die Praxis hat gezeigt, dass bei einem Überführen der Verriegelungshülse 4 aus der Verriegelungsposition R1 in die Ausgangsposition R2 und einem hiermit einhergehenden Trennen des Stecknippels 2 vom Kupplungskörper 3 nicht mit Sicherheit ausgeschlossen werden kann, dass zeitlich während des Trennens keine Fluidströmung durch den Kanal 5 (vgl. Figur 1) bewegt wird. Auch kann nicht mit Sicherheit ausgeschlossen werden, dass sich ein gewisser Anteil an Fluid zeitlich während des Trennens noch im Kanal 5 bzw. im Kupplungssystem 1 befindet. Eine bei Trennen des Stecknippels 2 vom Kupplungskörper 3 im Kanal 5 weiterhin ausgebildete Fluidströmung oder ein Rest an Fluid, welcher bei Trennen des Stecknippels 2 vom Kupplungskörper 3 noch im Kanal 5 aufgenommen ist, kann insbesondere dann kritisch sein, sofern das Fluid bzw. die Fluidströmung ein hohes Temperaturniveau besitzt, welches bei Kontakt ggf. zu einer Verletzung einer die Verriegelungshülse aus der Verriegelungsposition R1 in die Ausgangsposition R2 bewegenden Benutzers führt. In der Praxis kann bereits bei Temperaturen des Fluides bzw. einer Fluidströmung oberhalb von 50°C nicht mit Gewissheit ausgeschlossen werden, dass ein Benutzer bei einem Trennen des Stecknippels 2 vom Kupplungskörper 3 keine Verbrennungen erleidet. Mittels des Kupplungssystems 1 nach Figur 3 kann das Risiko einer solchen Verletzung geringgehalten oder sogar ausgeschlossen werden.

So ist bei dem Kupplungssystem 1 in Figur 3 zu erkennen, dass das Kupplungssystem 1 im Bereich der Zwangsführung 10 bzw. der S-förmigen Nut 13 eine optische Information 60 ausgibt, welche optische Information 60 ein jeweiliges Temperaturniveau des jeweiligen im Kanal 5 aufgenommenen Fluides abbildet. Die optische Information 60 bzw. ein Bereich, innerhalb dessen das Kupplungssystem 1 die optische Information 60 ausgibt, ist in Figur 3 mittels Schraffur angetragen. Befindet sich ein Temperaturniveau an im Kanal 5 aufgenommenem Fluid innerhalb eines ersten Temperaturbereichs, welcher beispielsweise unterhalb von 50°C festgelegt werden kann, so kann die optische Information ggf. mittels entsprechender Farbdarstellung einen Benutzer darüber informieren, dass keine Gefahr einer Verletzung besteht und somit die Verriegelungshülse 4 zum Trennen des Stecknippels 2 vom Kupplungskörper 3 betätigt werden kann. Es hat sich bewährt, sofern ein Benutzer ggf. mittels einer roten Farbdarstellung darüber informiert wird, dass ein Trennen des Stecknippels 2 vom Kupplungskörper 3 mit einem Risiko einer Verbrennung verbunden ist.

Befindet sich ein Temperaturniveau an im Kanal 5 aufgenommenem Fluid innerhalb eines zweiten Temperaturbereichs, welcher beispielsweise ab 50°C beginnen kann, so kann die optische Information ggf. mittels entsprechender Farbdarstellung einen Benutzer darüber informieren, dass der Stecknippel 2 nicht ohne ein hiermit in Zusammenhang stehendes Risiko einer Verletzung vom Kupplungskörper 3 getrennt werden kann. Ist dies der Fall, so kann oder muss ein Benutzer abwarten, bis die optische Information 60 ihn mittels entsprechender Farbdarstellung darüber informiert, dass zu einem bestimmten Zeitpunkt kein Risiko einer Verletzung besteht und somit der Stecknippel 2 vom Kupplungskörper 3 ohne ein entsprechendes Risiko einer Verletzung trennbar ist.

Um eine solche optische Information 60 bzw. Farbdarstellung auf unkomplizierte Art und Weise bereitstellen zu können, haben sich Ausführungsformen bewährt, bei welchen auf den Kupplungskörper 3 eine thermochromatische Substanz 62 aufgetragen ist. Dieser Aufbau, wie er für das Kupplungssystem 1 gemäß dem Ausführungsbeispiel nach Figur 3 vorgesehen ist und auch im allgemeinen Zusammenhang für weitere Ausführungsformen von Kupplungssystemen vorgesehen sein kann, wird in der schematischen Darstellung nach Figur 7 verdeutlicht.

Figur 7 zeigt hierbei lediglich einen Teil des Kupplungskörpers 3 im Längsschnitt und lässt erkennen, dass unmittelbar auf den Kupplungskörper 3 ein Farb- und/oder Lackauftrag 65 aufgebracht wurde, welcher keine thermochromatischen Eigenschaften besitzt. Der Farb- und/oder Lackauftrag 65, welcher keine thermochromatischen Eigenschaften besitzt, kann beispielsweise als roter Farb- und/oder Lackauftrag 65 ausgebildet sein. Oberhalb des roten Farb- und/oder Lackauftrags 65 ist die thermochromatische Substanz 62, die als thermochromatischer Farb- und/oder Lackauftrag 64 ausgebildet ist, angeordnet.

Die thermochromatische Substanz 62 bzw. der thermochromatische Farb- und/oder Lackauftrag 64 kann derart ausgebildet sein, dass die thermochromatische Substanz 62 bzw. der thermochromatische Farb- und/oder Lackauftrag 64 in einem Temperaturbereich, welcher sich unterhalb von 50°C befindet, als grüne Farbe ausgebildet ist bzw. in grüner Farbe erscheint. Da der Farb- und/oder Lackauftrag 65, welcher keine thermochromatischen Eigenschaften besitzt, unterhalb der thermochromatischen Substanz 62 positioniert ist, kann der Farb- und/oder Lackauftrag 65 nicht erkannt werden, sofern die thermochromatische Substanz 62 als grüne Farbe ausgebildet ist bzw. in grüner Farbe erscheint.

Befindet sich Fluid im Kanal 5 (vgl. Figur 1), dessen Temperatur mindestens 50°C beträgt, so wechselt die thermochromatische Substanz 62 bzw. der thermochromatische Farb- und/oder Lackauftrag 64 in einen Zustand, bei welchem die thermochromatische Substanz 62 bzw. der thermochromatische Farb- und/oder Lackauftrag 64 transparent ausgebildet ist. Der rote Farb- und/oder Lackauftrag 65, welcher keine thermochromatischen Eigenschaften besitzt, ist hierdurch als optische Information 60 erkennbar, welche einen Benutzer darüber informiert, dass ein Risiko einer Verbrennung besteht, sofern der Stecknippel 2 vom Kupplungskörper 3 getrennt wird. Erst wenn eine Ist-Temperatur von Fluid, welche sich im Kanal 5 befindet, unter 50°C fällt, wechselt die thermochromatische Substanz 62 in ihren Ausgangszustand zurück, bei welchem die thermochromatische Substanz 62 als grüne Farbe ausgebildet ist bzw. in grüner Farbe erscheint. Über die grüne Farbe bzw. über die optische Information 60 kann ein Benutzer sodann erkennen, dass nun ein Trennen des Stecknippels 2 vom Kupplungskörper 3 ohne ein Risiko einer Verbrennung möglich ist. Zwar ist der Aufbau gemäß Figur 7 lediglich beispielhaft zu verstehen. Dennoch können die zu Figur 7 beschriebenen Merkmale einzeln oder auch in der in Figur 7 dargestellten Kombination bei diversen weiteren Ausführungsformen eines erfindungsgemäßen Kupplungssystems vorgesehen sein, die in den Figuren nicht mit dargestellt sind.

Figur 4 zeigt eine schematische dreidimensionale Schnittdarstellung der Ausführungsform eines Kupplungssystems 1 gemäß Figuren 1 bis 3 ohne Stecknippel 2. Verrieglungshülse 4 und Kupplungskörper 3 befinden sich nun in der zweiten Ausgangsposition R2, bei welcher die Fixierung zwischen dem Kupplungskörper 3 und dem Stecknippel 2 (vgl. Figuren 1 bis 3) aufgehoben ist. Die Druckfeder 18 ist entspannt, so dass der Stecknippel 2 über den Druckzylinder 20 in Richtung weg des Kupplungskörpers 3 bewegt werden konnte. Der O-Ring 25 liegt nun an dem Druckzylinder 20 an. Zu erkennen ist weiterhin die Feder 9, die mit Torsion beaufschlagt wurde und axiale Stellkraft speichert.

Wird der Zapfen 11 nun durch Einstecken des Stecknippels 2 in den Bereich des Abschnitts 35 bewegt, kann die Feder 9 die Verriegelungshülse 4 gegenüber dem Kupplungskörper 3 mit einem Drehmoment und axialer Stellkraft beaufschlagen, so dass die Verriegelungshülse 4 gegenüber dem Kupplungskörper 3 in die erste Verriegelungsposition R1 überführt wird, wie sie Figuren 1 bis 3 zeigen.

Aus einer Zusammenschau der Figuren 3 und 4 wird zudem deutlich, dass die optische Information 60, welche über eine Temperatur eines jeweiligen im Kanal 5 aufgenommenen Fluides informiert, lediglich zu erkennen ist, sofern sich die Verriegelungshülse 4 in der Verriegelungsposition R1 gemäß Figur 3 befindet. Hat die Verriegelungshülse 4 in die Ausgangsposition R2 gemäß Figur 4 gewechselt, wird die auf den Kupplungskörper 3 bzw. auf eine Außenmantelfläche des Kupplungskörpers 3 aufgetragene optische Information 60 von der Verriegelungshülse 4 verdeckt. Wie vorhergehend bereits erwähnt, wechselt die Verriegelungshülse 4 bei Einstecken des Stecknippels 2 in den Kupplungskörper 3 automatisch aus der Ausgangsposition R2 nach Figur 4 in die Verriegelungsposition R1 nach Figur 3. Ist für den Benutzer im Bereich der Zwangsführung 10 bzw. im Bereich der S-förmigen Nut keinerlei als Farbdarstellung ausgebildete optische Information erkennbar, so kann ein Benutzer darauf schließen, dass der Stecknippels 2 nicht ordnungsgemäß in den Kupplungskörper 3 eingesteckt ist. Ausführungsformen, bei welchen die optische Information 60 lediglich zu erkennen ist, sofern sich die Verriegelungshülse 4 in der Verriegelungsposition R1 befindet, besitzen somit ein zusätzlich vermindertes Risiko einer Verletzung bei einer Kuppelung von Schlauch- und/oder Rohrleitungen mittels eines Kupplungssystems 1 gemäß dem Ausführungsbeispiel der Figuren 1 bis 7.

Figur 5 zeigt die Ausführungsform eines Kupplungssystems 1 ohne Stecknippel 2 aus Figur 4 im Längsschnitt. Zu erkennen sind zwei Haltenasen 19 der Feder 9. Über die Haltenasen 19 ist die Feder 9 an der Verriegelungshülse 4 und an dem Kupplungskörper 3 festgesetzt. Die Haltenasen 19 tauchen hierzu in korrespondierende Aussparungen der Verriegelungshülse 4 und des Kupplungskörpers 3 ein.

Figur 6 zeigt eine Darstellung der Ausführungsform eines Kupplungssystems ohne Stecknippel 2 aus den Figuren 4 und 5 im Teilschnitt. Gut sind in Figur 6 nochmals die beiden Schenkel 30 und 32 zu erkennen, die parallel zueinander verlaufen sowie der Abschnitt 35, welcher die beiden Schenkel 30 und 32 miteinander verbindet und orthogonal zu den Schenkeln 30 und 32 orientiert ist. Der Wechsel aus der zweiten Ausgangsposition R2 gemäß Figur 6 in die erste Verriegelungsposition R1 gemäß Figuren 1 bis 3 erfolgt durch stirnseitiges Einstecken des Stecknippels 2 in den Kupplungskörper 3.

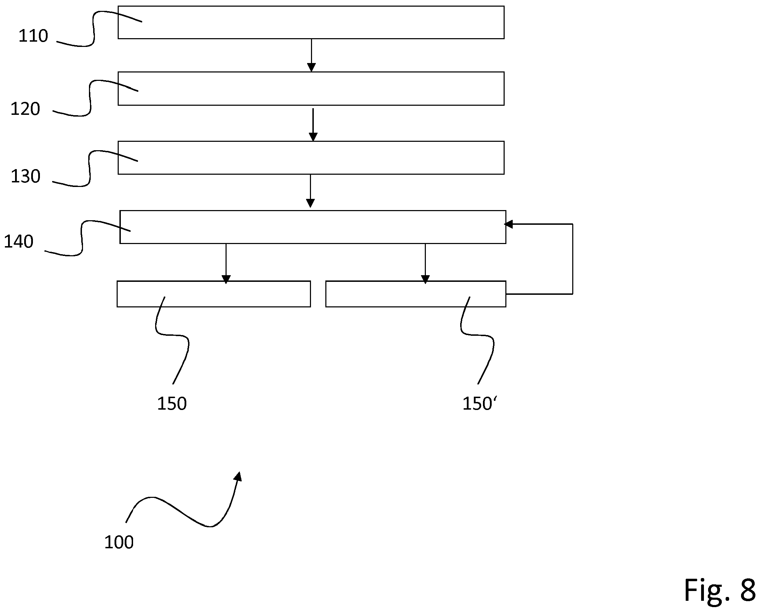

Figur 8 zeigt im Flussdiagramm einzelne Schritte, wie sie bei diversen Ausführungsformen des erfindungsgemäßen Verfahrens 100 vorgesehen sein können. Das Verfahren 100 ist vorgesehen zur Handhabung eines Kupplungssystems 1 für Schlauch- und/oder Rohrleitungen. Das Kupplungssystem 1 kann einen Aufbau gemäß dem vorherig beschriebenen Ausführungsbeispiel zu den Figuren 1 bis 7 besitzen.

Ein erster Schritt des Verfahrens 100, auf welchen mit Ziffer 110 verwiesen wird, sieht ein Einstecken eines Stecknippels 2 in einen Kupplungskörper 3 vor, woraus resultierend der Stecknippel 2 am Kupplungskörper 3 fixiert wird. Zeitlich hierauf folgend wird der Verfahrensschritt 120 durchgeführt, bei welchem eine Fluidströmung durch einen Kanal 5 bewegt wird, welchen der Kupplungskörper 3 und der in den Kupplungskörper 3 eingesteckte Stecknippel 2 ausbilden. Im Schritt 130 wird über das Kupplungssystem 1 eine Information über ein Temperaturniveau des im Kanal 5 aufgenommenen Fluides optisch abgebildet. Beispielsweise kann die optische Abbildung mittels Farbdarstellungen erfolgen. In grüner Farbdarstellung kann der Benutzer darüber informiert werden, dass ein jeweiliges im Kanal 5 aufgenommenes Fluid ein Temperaturniveau unterhalb von 50°C besitzt, so dass kein Risiko einer Verbrennung bei einem Kontakt mit dem Fluid besteht. In roter Farbedarstellung kann der Benutzer darüber informiert werden, dass ein jeweiliges im Kanal 5 aufgenommenes Fluid ein Temperaturniveau besitzt, welches ab 50°C beginnt, so dass ggf. ein Risiko einer Verbrennung bei einem Kontakt mit dem Fluid besteht.

Im Schritt 140 wird dieses optisch abgebildete Temperaturniveau seitens eines Benutzers entsprechend überprüft. Entspricht das anhand der optisch abgebildeten Informationen im Rahmen der Überprüfung festgestellte Ist-Temperaturniveau einem vorgegebenen Soll-Temperaturniveau bzw. wird der Benutzer über eine grüne Farbe hierüber informiert, so wird im Schritt 150 der Stecknippel 2 vom Kupplungskörper 3 getrennt. Entspricht das anhand der optisch abgebildeten Informationen im Rahmen der Überprüfung festgestellte Ist-Temperaturniveau nicht einem vorgegebenen Soll-Temperaturniveau bzw. wird der Benutzer über eine rote Farbe hierüber informiert, so wird gemäß dem Schritt 150` die Verbindung zwischen Stecknippel 2 und Kupplungskörper 3 beibehalten, woraufhin nach einer bestimmten Zeitdauer eine erneute Überprüfung anhand der optisch abgebildeten Informationen erfolgt, ob das sodann ausgebildete Ist-Temperaturniveau das jeweilige vorgegebene Soll-Temperaturniveau eingenommen hat. Das optische Abbilden des jeweiligen Ist-Temperaturniveaus kann weiterhin unter Zuhilfenahme einer thermochromatischen Substanz erfolgen, welche auf das Kupplungssystem 1 und insbesondere auf einen Kupplungskörper 3 des Kupplungssystems 1 aufgetragen ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Kupplungssystem
- 2: Stecknippel
- 3: Kupplungskörper
- 4: Verriegelungshülse
- 5: Kanal
- 6: Rastelemente
- 7: Nut
- 8: Rastkugel
- 9: Feder
- 10: Zwangsführung
- 11: Zapfen
- 12: Verriegelungsmechanismus
- 13: S-förmige Nut
- 15: Fortsatz
- 17: Profilierung
- 18: Druckfeder
- 19: Haltenase
- 20: Druckzylinder
- 25: O-Ring
- 27: Fase
- 28: Anschlag
- 30: Erster Schenkel
- 32: Zweiter Schenkel
- 35: Abschnitt
- 40: Längsachse
- 100: Verfahren
- 110: Erster Verfahrensschritt
- 120: Zweiter Verfahrensschritt
- 130: Dritter Verfahrensschritt
- 140: Vierter Verfahrensschritt
- 150: Fünfter Verfahrensschritt
- 150`: Alternativer fünfter Verfahrensschritt
- R1: Verriegelungsposition
- R2: Ausgangsposition

## Patentansprüche

1. Kupplungssystem (1) für Schlauch- und/oder Rohrleitungen, umfassend
- einen Stecknippel (2) und
- einen Kupplungskörper (3), in welchen der Stecknippel (2) einsteckbar ist, so dass der Kupplungskörper (3) und der Stecknippel (2) gemeinsam einen Kanal (5) für eine Fluidströmung ausbilden sowie
- einen Verriegelungsmechanismus (12), welcher den Stecknippel (2) bei einem Einstecken in den Kupplungskörper (3) selbständig am Kupplungskörper (3) fixiert und welcher zum Aufheben der Fixierung mechanisch betätigt werden kann, **dadurch gekennzeichnet, dass**
- das Kupplungssystem (1) zur Ausgabe einer optischen Information (60) ausgebildet ist, welche optische Information (60) ein jeweiliges Temperaturniveau des jeweiligen im Kanal (5) aufgenommenen Fluides abbildet, wobei
- das Kupplungssystem (1) über mindestens eine thermochromatische Substanz (62) verfügt, die als mindestens ein thermochromatischer Farb- und/oder Lackauftrag (64) ausgebildet ist und unter Zuhilfenahme welcher mindestens einen thermochromatischen Substanz (62) das Kupplungssystem (1) zur Ausgabe der optischen Information (60) ausgebildet ist, welche optische Information (60) das Temperaturniveau des jeweiligen im Kanal (5) aufgenommenen Fluides abbildet und wobei
- der mindestens eine thermochromatische Farb- und/oder Lackauftrag (64) oberhalb eines weiteren Farb- und/oder Lackauftrages (65) angeordnet ist und bei welchem Kupplungssystem (1) der thermochromatische Farb- und/oder Lackauftrag (64) derart ausgebildet ist, dass dieser bei Überschreiten einer definierten Temperatur in einen transparenten Zustand wechselt.

2. Kupplungssystem nach Anspruch 1, bei welchem die optische Information (60), welche eine jeweiliges Temperaturniveau des jeweiligen im Kanal (5) aufgenommenen Fluides abbildet
a) auf einer Außenmantelfläche des Stecknippels (2) darstellbar ist und/oder
b) auf einer Außenmantelfläche des Kupplungskörpers (3) darstellbar ist und/oder
c) auf einer Außenmantelfläche einer als Bestandteil des Verriegelungsmechanismus (12) ausgebildeten Verriegelungshülse (4), welche zum Aufheben der Fixierung in axialer Richtung bewegbar ist, darstellbar ist.

3. Kupplungssystem nach Anspruch 1 oder Anspruch 2, bei welchem der weitere Farb- und/oder Lackauftrag (65) keine thermochromatischen Eigenschaften besitzt.

4. Kupplungssystem nach einem der Ansprüche 1 bis 3, bei welchem der Verriegelungsmechanismus (12) eine Verriegelungshülse (4) umfasst, die zum Aufheben einer zwischen Stecknippel (2) und Kupplungskörper (3) ausgebildeten Fixierung in axialer Richtung betätigt werden kann und welche Verriegelungshülse (4)
- sich bei fehlender Fixierung des Stecknippels (2) am Kupplungskörper (3) in einer Ausgangsposition (R2) befindet und bei Einstecken des Stecknippels (2) in den Kupplungskörper (3) vorzugsweise selbständig aus der Ausgangsposition (R2) in eine Verriegelungsposition (R1) wechselt, welche Verriegelungsposition (R1) gegenüber der Ausgangsposition (R2) in axialer Richtung versetzt ist, und bei welchem Kupplungssystem (1) vorgesehen ist, dass
- die optische Information (60), welche optische Information (60) ein jeweiliges Temperaturniveau des jeweiligen im Kanal (5) aufgenommenen Fluides abbildet, erkennbar ist, sofern sich die Verriegelungshülse (4) in der Verriegelungsposition (R1) befindet und wobei die optische Information (60), welche optische Information (60) ein jeweiliges Temperaturniveau des jeweiligen im Kanal (5) aufgenommenen Fluides abbildet, von der Verriegelungshülse zumindest anteilig oder im Wesentlichen vollständig verdeckt wird, sofern die Verriegelungshülse (4) ihre Ausgangsposition (R2) eingenommen hat.

5. Kupplungssystem nach Anspruch 4, bei welchem der Verriegelungsmechanismus (12) über eine Zwangsführung (10) verfügt, die durch eine Nut in der Verriegelungshülse ausgebildet ist, durch welche ein fest mit dem Kupplungskörper (3) in Verbindung stehender Zapfen (11) greift, welcher bei einem Wechsel der Verriegelungshülse (4) aus der Ausgangsposition (R2) in die Verriegelungsposition (R1) und bei einem Wechsel aus der Verriegelungsposition (R1) in die Ausgangsposition (R2) jeweils in der Nut geführt ist und bei welchem Kupplungssystem (1) vorgesehen ist, dass
- die optische Information (60), welche optische Information (60) ein jeweiliges Temperaturniveaus des jeweiligen im Kanal (5) aufgenommenen Fluides abbildet, im Bereich der durch die Verriegelungshülse (4) ausgebildeten Nut erkennbar ist, sofern sich die Verriegelungshülse (4) in der Verriegelungsposition (R1) befindet und bei welchem die optische Information (60), welche optische Information (60) ein jeweiliges Temperaturniveau des jeweiligen im Kanal (5) aufgenommenen Fluides abbildet, von der Verriegelungshülse (4) zumindest anteilig oder im Wesentlichen vollständig verdeckt wird, sofern die Verriegelungshülse (4) ihre Ausgangsposition (R2) eingenommen hat.

6. Kupplungssystem nach Anspruch 5, bei welchem die Nut in der Verriegelungshülse S-förmig oder L-förmig ausgebildet ist.

7. Verfahren (100) zur Handhabung eines Kupplungssystems (1) für Schlauch- und/oder Rohrleitungen, das einen Stecknippel (2), einen Kupplungskörper (3) und einen Verriegelungsmechanismus (12) besitzt, das Verfahren umfassend folgende Schritte:
- Einstecken des Stecknippels (2) in den Kupplungskörper (3), woraus resultierend der Stecknippel (2) über den Verriegelungsmechanismus (12) selbständig am Kupplungskörper (3) fixiert wird und zeitlich hierauf folgend
- Bewegen einer Fluidströmung durch einen Kanal (5), welchen der Kupplungskörper (3) und der in den Kupplungskörper (3) eingesteckte Stecknippel (2) ausbilden sowie zeitlich hierauf folgend
- Betätigen des Verriegelungsmechanismus (12), womit einhergehend die Fixierung des Stecknippels (2) am Kupplungskörper (3) gelöst und der Stecknippel (2) vom Kupplungskörper (3) getrennt wird, das Verfahren **dadurch gekennzeichnet, dass**
- das Kupplungssystem (1) eine Information über ein Ist-Temperaturniveau eines im Kanal (5) aufgenommenen Fluides optisch abbildet und bei welchem das Trennen des Stecknippels (2) vom Kupplungskörper (3) zu einem Zeitpunkt erfolgt, bei welchem das jeweilige über die Information optisch abgebildete Ist-Temperaturniveau einem vorgegebenen Soll-Temperaturniveau entspricht, wobei
- das Kupplungssystem (1) über eine thermochromatische Substanz (62) verfügt, welche als thermochromatischer Farb- und/oder Lackauftrag (64) ausgebildet ist und unter Zuhilfenahme welcher mindestens einen thermochromatischen Substanz (62) das Ist-Temperaturniveau des im Kanal (5) aufgenommenen Fluides optisch abgebildet wird und wobei
- der mindestens eine thermochromatische Farb- und/oder Lackauftrag (64) oberhalb eines weiteren Farb- und/oder Lackauftrages (65) angeordnet ist und wobei der mindestens eine thermochromatische Farb- und/oder Lackauftrag (64) derart ausgebildet ist, dass dieser bei Überschreiten einer definierten Temperatur in einen transparenten Zustand wechselt.

8. Verfahren nach Anspruch 7, bei welchem unterschiedlichen Temperaturniveaus unterschiedliche Farben zugeordnet werden und bei welchem das jeweilige Ist-Temperaturniveau eines im Kanal (5) aufgenommenen Fluides über eine Darstellung der dem jeweiligen Ist-Temperaturniveaus zugeordneten Farbe optisch abgebildet wird.

9. Verfahren nach Anspruch 7 oder Anspruch 8, bei welchem das Kupplungssystem (1) eine Verriegelungshülse (4) umfasst, welche bei Einstecken des Stecknippels (2) in den Kupplungskörper (3) selbständig aus einer Ausgangsposition (R2) in eine Verriegelungsposition (R1) wechselt, wobei ein Bereich des Kupplungssystems (1), innerhalb dessen die Information über ein Ist-Temperaturniveau des im Kanal (5) aufgenommenen Fluides optisch abgebildet wird, von der Verriegelungshülse (4) in der Ausgangsposition (R2) verdeckt wird und bei einem Wechsel von der Ausgangsposition (R2) in die Verrieglungsposition (R1) freigelegt wird.

10. Verfahren nach Anspruch 9, bei welchem das Kupplungssystem (1) eine Zwangsführung (10) umfasst, die durch eine Nut in der Verriegelungshülse (4) ausgebildet ist, durch welche ein fest mit dem Kupplungskörper (3) in Verbindung stehender Zapfen (11) greift, wobei der Zapfen (11) bei einem Wechsel der Verriegelungshülse (4) aus der Ausgangsposition (R2) in die Verriegelungsposition (R1) und bei einem Wechsel aus der Verriegelungsposition (R1) in die Ausgangsposition (R2) jeweils in der Nut geführt wird und bei welchem Verfahren (100) vorgesehen ist, dass
- der Bereich des Kupplungssystem (1), innerhalb dessen die Information über ein Ist-Temperaturniveau des im Kanal (5) aufgenommenen Fluides optisch abgebildet wird, von der Verriegelungshülse (4) in der Ausgangsposition (R2) verdeckt wird und bei einem Wechsel der Verriegelungshülse (4) von der Ausgangsposition (R2) in die Verriegelungsposition (R1) im Bereich der Nut, welche in der Verriegelungshülse (4) ausgebildet ist, freigelegt wird.

## Claims

1. A coupling system (1) for hose lines and/or pipelines, comprising
- a plug nipple (2) and
- a coupling body (3) into which the plug nipple (2) is insertable such that the coupling body (3) and the plug nipple (2) together form a channel (5) for a fluid flow, and
- a locking mechanism (12), which autonomously fixes the plug nipple (2) to the coupling body (3) when the plug nipple (2) is inserted into the coupling body (3), and which can be mechanically actuated to undo the fixing, **characterised in that**
- the coupling system (1) is configured to output an optical information (60), which optical information (60) maps a particular temperature level of the particular fluid contained in the channel (5), wherein
- the coupling system (1) has at least one thermochromic substance (62), which is formed as at least one application of thermochromic paint and/or varnish (64), and with the help of which at least one thermochromic substance (62) the coupling system (1) is configured to output the optical information (60), which optical information (60) maps the temperature level of the particular fluid contained in the channel (5), and wherein
- the at least one application of thermochromic paint and/or varnish (64) is arranged above a further application of paint and/or varnish (65), and in which coupling system (1) the application of thermochromic paint and/or varnish (64) is formed such that it changes into a transparent state upon exceeding a defined temperature.

2. The coupling system according to claim 1, in which the optical information (60), which maps a particular temperature level of the particular fluid contained in the channel (5),
a) is representable on an outer lateral surface of the plug nipple (2), and/or
b) is representable on an outer lateral surface of the coupling body (3), and/or
c) is representable on an outer lateral surface of a locking sleeve (4) formed as part of the locking mechanism (12), the locking sleeve (4) being movable in axial direction in order to undo the fixing.

3. The coupling system according to claim 1 or claim 2, in which the further application of paint and/or varnish (65) has no thermochromic characteristics.

4. The coupling system according to one of the claims 1 to 3, in which the locking mechanism (12) comprises a locking sleeve (4), which can be actuated in axial direction in order to undo a fixing formed between plug nipple (2) and coupling body (3), and which locking sleeve (4)
- is in an initial position (R2) when the fixing of the plug nipple (2) to the coupling body (3) is missing, and which preferably autonomously changes from the initial position (R2) into a locking position (R1) when the plug nipple (2) is inserted into the coupling body (3), which locking position (R1) is offset in axial direction relative to the initial position (R2), and in which coupling system (1) it is provided that
- the optical information (60), which optical information (60) maps a particular temperature level of the particular fluid contained in the channel (5), is identifiable if the locking sleeve (4) is in the locking position (R1), and wherein the optical information (60), which optical information (60) maps a particular temperature level of the particular fluid contained in the channel (5), is at least partially or substantially completely covered by the locking sleeve if the locking sleeve (4) has taken its initial position (R2).

5. The coupling system according to claim 4, in which the locking mechanism (12) comprises a forced guidance (10), which is formed by a groove in the locking sleeve through which a pin (11) extends, which is in fixed communication with the coupling body (3), which pin (11) is guided in the groove in each case in a change of the locking sleeve (4) from the initial position (R2) into the locking position (R1) and in a change from the locking position (R1) into the initial position (R2), and in which coupling system (1) it is provided that
- the optical information (60), which optical information (60) maps a particular temperature level of the particular fluid contained in the channel (5), is identifiable in the region of the groove formed by the locking sleeve (4) if the locking sleeve (4) is in the locking position (R1), and in which the optical information (60), which optical information (60) maps a particular temperature level of the particular fluid contained in the channel (5), is at least partially or substantially completely covered by the locking sleeve (4) if the locking sleeve (4) has taken its initial position (R2).

6. The coupling system according to claim 5, in which the groove is formed in an S-shaped or L-shaped manner in the locking sleeve.

7. A method (100) used to handle a coupling system (1) for hose lines and/or pipelines, having a plug nipple (2), a coupling body (3), and a locking mechanism (12), the method comprising the following steps:
- inserting the plug nipple (2) into the coupling body (3), which inserting results in the plug nipple (2) being autonomously fixed to the coupling body (3) via the locking mechanism (12), and, subsequently,
- moving a fluid flow through a channel (5), which is formed by the coupling body (3) and the plug nipple (2) inserted into the coupling body (3), and, subsequently,
- actuating the locking mechanism (12), which actuating is associated with the fixing of the plug nipple (2) to the coupling body (3) being undone and the plug nipple (2) being separated from the coupling body (3), the method being **characterised in that**
- the coupling system (1) optically maps an information on an actual temperature level of a fluid contained in the channel (5), and in which the separation of the plug nipple (2) from the coupling body (3) is carried out at a moment when the particular actual temperature level optically mapped via the information corresponds to a specified target temperature level, wherein
- the coupling system (1) has a thermochromic substance (62), which is formed as application of thermochromic paint and/or varnish (64), and with the help of which at least one thermochromic substance (62) the actual temperature level of the fluid contained in the channel (5) is optically mapped, and wherein
- the at least one application of thermochromic paint and/or varnish (64) is arranged above another application of paint and/or varnish (65), and wherein the at least one application of thermochromic paint and/or varnish (64) is formed such that it changes into a transparent state upon exceeding a defined temperature.

8. The method according to claim 7, in which different temperature levels are assigned to different colours, and in which the particular actual temperature level of a fluid contained in the channel (5) is optically mapped via a representation of the particular colour assigned to the particular actual temperature level.

9. The method according to claim 7 or claim 8, in which the coupling system (1) comprises a locking sleeve (4), which autonomously changes from an initial position (R2) into a locking position (R1) when the plug nipple (2) is inserted into the coupling body (3), wherein a region of the coupling system (1), within which region the information on an actual temperature level of the fluid contained in the channel (5) is optically mapped, is covered by the locking sleeve (4) in the initial position (R2), and is uncovered in a change from the initial position (R2) into the locking position (R1).

10. The method according to claim 9, in which the coupling system (1) comprises a forced guidance (10), which is formed by a groove in the locking sleeve (4) through which a pin (11) extends, which pin (11) is in fixed communication with the coupling body (3), wherein the pin (11) is guided in the groove in each case in a change of the locking sleeve (4) from the initial position (R2) into the locking position (R1) and in a change from the locking position (R1) into the initial position (R2), and in which method (100) it is provided that
- the region of the coupling system (1), within which region the information on an actual temperature level of the fluid contained in the channel (5) is optically mapped, is covered by the locking sleeve (4) in the initial position (R2), and is uncovered in a change of the locking sleeve (4) from the initial position (R2) into the locking position (R1) in the region of the groove formed in the locking sleeve (4).

## Revendications

1. Système d'accouplement (1) pour des tuyauteries flexibles et/ou tuyauteries rigides, comprenant
- un embout mâle (2) et
- un corps d'accouplement (3) dans lequel ledit embout mâle (2) peut être inséré de sorte que le corps d'accouplement (3) et l'embout mâle (2) forment ensemble un canal (5) pour un écoulement de fluide et
- un mécanisme de verrouillage (12) qui fixe automatiquement ledit embout mâle (2) sur le corps d'accouplement (3) lorsqu'il est inséré dans le corps d'accouplement (3) et qui peut être actionné mécaniquement pour supprimer la fixation, **caractérisé par le fait que**
- le système d'accouplement (1) est conçu pour délivrer une information optique (60), laquelle information optique (60) représente un niveau de température respectif du fluide respectif reçu dans le canal (5), dans lequel
- le système d'accouplement (1) dispose d'au moins une substance thermochromatique (62), qui est conçue comme au moins un enduit de peinture et/ou de vernis thermochromatique (64), et à l'aide de laquelle au moins une substance thermochromatique (62), le système d'accouplement (1) est conçu pour délivrer ladite information optique (60), laquelle information optique (60) représente le niveau de température du fluide respectif reçu dans le canal (5), et dans lequel
- ledit au moins un enduit de peinture et/ou de vernis thermochromatique (64) est disposé au-dessus d'un autre enduit de peinture et/ou de vernis (65) et dans lequel système d'accouplement (1) ledit enduit de peinture et/ou de vernis thermochromatique est conçu de telle sorte que celui-ci passe à un état transparent lorsqu'une température définie est dépassée.

2. Système d'accouplement selon la revendication 1, dans lequel l'information optique (60) qui représente un niveau de température respectif du fluide respectif contenu dans le canal (5)
a) peut être représentée sur une surface latérale extérieure de l'embout mâle (2) et/ou
b) peut être représentée sur une surface latérale extérieure du corps d'accouplement (3) et/ou
c) peut être représentée sur une surface latérale extérieure d'une douille de verrouillage (4) qui est conçue en tant que composant du mécanisme de verrouillage (12) et qui peut être déplacée dans la direction axiale pour supprimer la fixation.

3. Système d'accouplement selon la revendication 1 ou la revendication 2, dans lequel ledit autre enduit de peinture et/ou de vernis (65) ne présente pas de propriétés thermochromatiques.

4. Système d'accouplement selon l'une quelconque des revendications 1 à 3, dans lequel le mécanisme de verrouillage (12) comprend une douille de verrouillage (4) qui peut être actionnée dans la direction axiale pour supprimer une fixation réalisée entre l'embout mâle (2) et le corps d'accouplement (3), et laquelle douille de verrouillage (4)
- se trouve dans une position de départ (R2) si l'embout mâle (2) n'est pas fixé sur le corps d'accouplement (3), et, lorsque l'embout mâle (2) est inséré dans le corps d'accouplement (3), passe de préférence automatiquement de la position de départ (R2) à une position de verrouillage (R1), laquelle position de verrouillage (R1) est décalée dans la direction axiale par rapport à la position de départ (R2), et dans lequel système d'accouplement (1) il est prévu que
- l'information optique (60), laquelle information optique (60) représente un niveau de température respectif du fluide respectif reçu dans le canal (5), est perceptible si la douille de verrouillage (4) se trouve dans la position de verrouillage (R1), et dans lequel l'information optique (60), laquelle information optique (60) représente un niveau de température respectif du fluide respectif reçu dans le canal (5), est recouverte au moins proportionnellement ou pour l'essentiel complètement par la douille de verrouillage si la douille de verrouillage (4) a pris sa position de départ (R2).

5. Système d'accouplement selon la revendication 4, dans lequel le mécanisme de verrouillage (12) dispose d'un guidage forcé (10) qui est formé par une rainure dans la douille de verrouillage qui est traversée par un tenon (11) lequel est en communication fixe avec le corps d'accouplement (3) et lequel est guidé dans la rainure respectivement lorsque la douille de verrouillage (4) passe de la position de départ (R2) à la position de verrouillage (R1) et lorsqu'elle passe de la position de verrouillage (R1) à la position de départ (R2), et dans lequel système d'accouplement (1) il est prévu que
- l'information optique (60), laquelle information optique (60) représente un niveau de température respectif du fluide respectif reçu dans le canal (5), est perceptible au niveau de la rainure réalisée par la douille de verrouillage (4) si la douille de verrouillage (4) se trouve dans la position de verrouillage (R1), et dans lequel l'information optique (60), laquelle information optique (60) représente un niveau de température respectif du fluide respectif reçu dans le canal (5), est recouverte au moins proportionnellement ou pour l'essentiel complètement par la douille de verrouillage (4) si la douille de verrouillage (4) a pris sa position de départ (R2).

6. Système d'accouplement selon la revendication 5, dans lequel la rainure dans la douille de verrouillage est en forme de S ou en forme de L.

7. Procédé (100) de manipulation d'un système d'accouplement (1) pour des tuyauteries flexibles et/ou tuyauteries rigides, qui comprend un embout mâle (2), un corps d'accouplement (3) et un mécanisme de verrouillage (12), le procédé comprenant les étapes suivantes consistant à:
- insérer l'embout mâle (2) dans le corps d'accouplement (3) d'où résulte que l'embout mâle (2) est fixé automatiquement via le mécanisme de verrouillage (12) sur le corps d'accouplement (3), et ensuite
- déplacer un écoulement de fluide à travers un canal (5) qui est formé par le corps d'accouplement (3) et l'embout mâle (2) inséré dans le corps d'accouplement (3), et ensuite
- actionner le mécanisme de verrouillage (12) ce qui entraîne que la fixation de l'embout mâle (2) sur le corps d'accouplement (3) est libérée et que l'embout mâle (2) est séparé du corps d'accouplement (3), le procédé étant **caractérisé par le fait que**
- le système d'accouplement (1) représente optiquement une information relative à un niveau de température réel d'un fluide reçu dans le canal (5) et dans lequel la séparation de l'embout mâle (2) du corps d'accouplement (3) a lieu à un moment auquel le niveau de température réel respectif représenté optiquement par l'information correspond à un niveau de température cible prédéterminé, dans lequel
- le système d'accouplement (1) comprend une substance thermochromatique (62) qui est conçue en tant qu'enduit de peinture et/ou de vernis thermochromatique (64), et à l'aide de laquelle au moins une substance thermochromatique (62), le niveau de température réel du fluide reçu dans le canal (5) est représenté optiquement et dans lequel
- ledit au moins un enduit de peinture et/ou de vernis thermochromatique (64) est disposé au-dessus d'un autre enduit de peinture et/ou de vernis (65) et dans lequel ledit au moins enduit de peinture et/ou de vernis thermochromatique (64) est conçu de telle sorte que celui-ci passe à un état transparent lorsqu'une température définie est dépassée.

8. Procédé selon la revendication 7, dans lequel des couleurs différentes sont associées à différents niveaux de température et dans lequel le niveau de température réel respectif d'un fluide reçu dans le canal (5) est représenté optiquement par une représentation de la couleur associée au niveau de température réel respectif.

9. Procédé selon la revendication 7 ou la revendication 8, dans lequel le système d'accouplement (1) comprend une douille de verrouillage (4) qui, lorsque l'embout mâle (2) est inséré dans le corps d'accouplement (3), passe automatiquement d'une position de départ (R2) à une position de verrouillage (R1), dans lequel une zone du système d'accouplement (1), à l'intérieur de laquelle l'information relative à un niveau de température réel du fluide reçu dans le canal (5) est représentée optiquement, est recouverte par la douille de verrouillage (4) dans la position de départ (R2) et est dégagée lors d'un passage de la position de départ (R2) à la position de verrouillage (R1).

10. Procédé selon la revendication 9, dans lequel le système d'accouplement (1) comprend un guidage forcé (10) qui est formé par une rainure dans la douille de verrouillage (4) qui est traversée par un tenon (11) lequel est en communication fixe avec le corps d'accouplement (3), dans lequel ledit tenon (11) est guidé dans la rainure respectivement lorsque la douille de verrouillage (4) passe de la position de départ (R2) à la position de verrouillage (R1) et lorsqu'elle passe de la position de verrouillage (R1) à la position de départ (R2), et dans lequel procédé (100) il est prévu que
- la zone du système d'accouplement (1) à l'intérieur de laquelle l'information relative à un niveau de température réel du fluide reçu dans le canal (5) est représentée optiquement, est recouverte par la douille de verrouillage (4) dans la position de départ (R2) et est dégagée au niveau de la rainure qui est formée dans la douille de verrouillage (4), lorsque la douille de verrouillage (4) passe de la position de départ (R2) à la position de verrouillage (R1).
